# EUROPEAN PATENT SPECIFICATION

(11) **EP 0 734 898 B1**
(45) Date of publication and mention of the grant of the patent: **12.12.2001**
(21) Application number: 96200703.5
(22) Date of filing: 14.03.1996
(51) Int. Cl.: B60K 13/06, B60K 13/02

(54) **Engine intake structure for construction machine**
Motoransaugsystem für Baumaschinen
Système d'admission de moteur pour machine de construction

(30) Priority: 31.03.1995 JP 7606195
(43) Date of publication of application: 02.10.1996
(73) Proprietor: Fiat-Hitachi Excavators S.p.A., 10099 San Mauro Torinese (Torino) (IT)
(72) Inventor: Akira, Tatsumi, Bunkyo-ku, Tokyo (JP); Duri, Gianni, 40027 Mordano, Bologna (IT); Prealta, Dario, 10093 Collegno, Torino (IT)
(74) Representative: Vandenbroucke, Alberic

(56) References cited:
- DE-U- 1 757 003
- US-A- 3 207 250
- US-A- 3 232 368
- US-A- 5 199 522

## Description

The present invention relates to an engine intake structure for construction machines such as hydraulically operated excavators, and more particularly to an engine intake structure for construction machines having a door for maintenance and inspection provided in a side panel of a machine compartment at a position adjacent to an air cleaner.

Generally, construction machines such as hydraulic excavators have a machine compartment comprising an engine, an air cleaner for filtering the air aspirated by the engine, a muffler for discharging engine exhaust gasses after combustion, a cooling fan operatively connected to the engine, an oil cooler and a radiator. Ambient air sucked in through an intake port of the air cleaner provided in an upper part of the machine body is filtered by said air cleaner and then supplied to the engine. The engine exhaust gasses are conducted through the muffler whereafter they are discharged through an exhaust port provided at the top of the machine compartment. Ambient air is also aspirated by a fan intended to cool the engine, the oil cooler and the radiator, whereafter it is discharged to the environment through an exhaust port usually formed in an engine cover or the like at the top of the machine compartment. A door for maintenance and inspection is usually provided in a side panel of the machine compartment at a position adjacent to the air cleaner.

JP-A-62.113617 describes an engine intake structure wherein an intake duct leading to an engine is formed by a machine body frame, and an air inlet is provided at a position away from the engine in a side portion of the machine body frame.

JP-A-4.109026 on the other hand describes an engine intake structure wherein an inlet of an intake duct is provided in a bottom wall of an engine enclosure.

The above mentioned prior art embodiments however suffer from the following drawbacks. It is advantageous that the temperature of the air aspirated by an air cleaner is as low as possible from the viewpoint of increasing the fuel efficiency of the engine. In a conventional engine intake structure, however, the intake port for the air cleaner is provided at the top of the machine compartment, being in the same region as the exhaust port of the muffler and the exhaust port of the cooling air. This gives rise to the problem that the air cleaner is apt to aspirate engine exhaust gasses or heated air which has cooled the oil cooler and the radiator, and hence the temperature of the air entering the air cleaner is higher than it normally should be. Although the exhaust port of the cooling air and the exhaust port of the muffler are of course designed so as to be located in positions as far away as possible from the intake port of the air cleaner, the air cleaner nevertheless often aspirates heated air or engine gasses depending on the direction of the wind.

In the engine intake structures described in JP-A-62.113617 and JP-A-4.109026, since the air inlet of the air cleaner is located at a position other than the upper part of the machine body, the hot exhaust gasses or the heated cooling air is prevented from being aspirated through said air inlet, unlike the above conventional structure. However, if the air inlet is provided in a side panel of the machine body frame as described in JP-A-62.113617, problems arise in a construction machine having a door for maintenance and inspection provided in the same side panel of the engine compartment at a position adjacent to the air cleaner in as much as the door size must be small in order to avoid interference of the door with the air inlet. This of course hampers the maintenance/inspection work. Also, if the inlet of the intake duct is located in a bottom wall of the engine compartment as depicted in JP-A-4.109026, the intake duct is extended vertically in the engine compartment which again interferes with a person carrying out maintenance and inspection.

In US-A-3.207.250, which corresponds to the preamble of claim 3, an agricultural tractor is described comprising an air cleaner assembly located underneath a pivotable top hood of the tractor. An air inlet conduit is guided from the cleaner assembly towards a position slightly underneath the top hood, where it operatively communicates with an air inlet tube extending vertically through the top surface of the hood. In the region where the air inlet tube and the air inlet conduit meet, a resilient sealing is attached to the inlet tube, allowing sealed engagement between the tube and the conduit when the top hood is closed. Although the arrangement provides a solution for providing an air inlet in a movable panel, it nevertheless suffers from the disadvantage that rain freely may enter the air cleaner. The tubular shape of the inlet tube furthermore prevents the tube from being too long as this would increase the air intake pressure.

It is therefore an object of the present invention to provide an engine air intake structure for a construction machine which overcomes the above disadvantages of the prior art.

According to the present invention an engine air intake structure for an industrial vehicle is provided wherein an engine and an air cleaner for filtering air aspirated into said engine are installed in a machine compartment, and a door for maintenance and inspection is provided in a side panel of said machine compartment at a position adjacent to said air cleaner; said engine air intake structure comprising :
- an air intake port for said air cleaner provided in said door,
- an intake duct extending from said air cleaner to a position near said intake port, and
- joint means for operatively connecting said intake port with said intake duct when said door is closed.

The engine air intake structure is characterized in that said intake port is formed by at least one elongate horizontal aperture.

Preferably, the joint means is provided on the inner side of the door to be communicated with the intake port, and includes a joint duct jointed to the intake duct when the door is closed. The joint duct comprises a box-shaped portion positioned on the inner side of the door so as to cover the intake port and defining a cavity communicated with the intake port, and an opening jointed to the intake duct when the door is closed. The box-shaped portion of the joint duct has a bottom wall inclined downwardly to smoothly connect with a bottom surface of the intake port to drain water which eventually has entered the joint duct.

Since the intake port is provided in a side panel of the machine compartment, air at the side of the machine compartment is aspirated through the intake port and then filtered by the air cleaner before entering the engine. Therefore, the air cleaner always is provided with air having the normal ambient temperature, and not with hot exhaust gasses or cooling air heated after the heat exchange which are discharged above the machine compartment. This results in a higher combustion efficiency of the engine. Furthermore, since the intake port is disconnected from the intake duct when the door is opened, the door can be opened and closed in a manner similar to a conventional door having no intake ports. As such, maintenance/inspection work can be carried out without disturbance.

An engine intake structure in accordance with the present invention will now be described in greater detail, by way of example, with reference to the accompanying drawings, in which :
Figure 1 is a vertical sectional view of a machine compartment of a construction machine with an engine intake structure according to one embodiment of the present invention;
Figure 2 is a side view of principal parts of the construction machine shown in Figure 1;
Figure 3 is a sectional view taken along line III - III in Figure 2;
Figure 4 is a sectional view taken along line IV - IV in Figure 2;
Figure 5 is a side view taken with a door panel in the open position;
Figure 6 is a vertical sectional view of a machine compartment of a construction machine with a conventional engine intake structure;
Figure 7 is a vertical sectional view of a machine compartment of a construction machine with an engine intake structure according to another embodiment of the present invention; and
Figure 8 is a vertical sectional view of an engine intake structure according to a still further embodiment of the present invention.

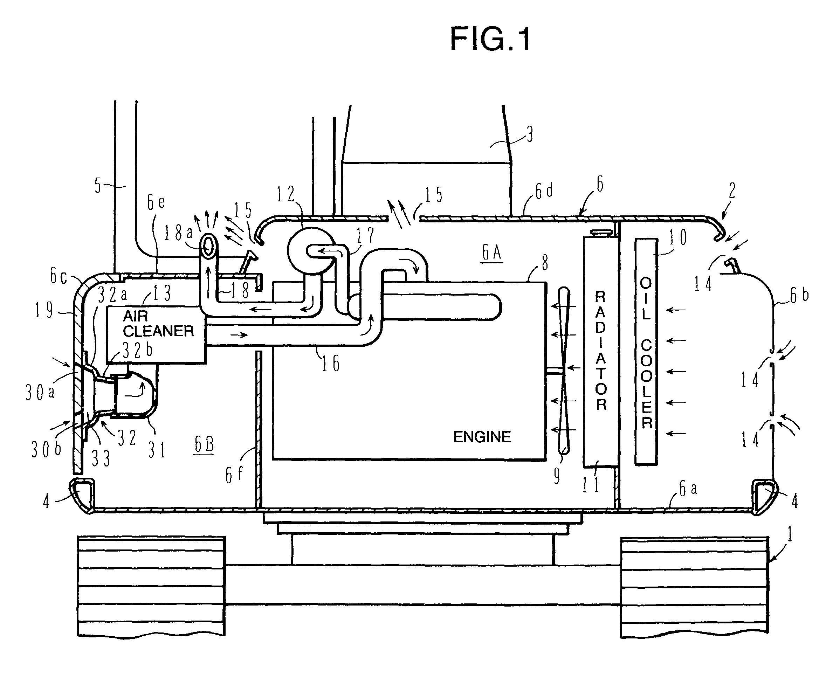

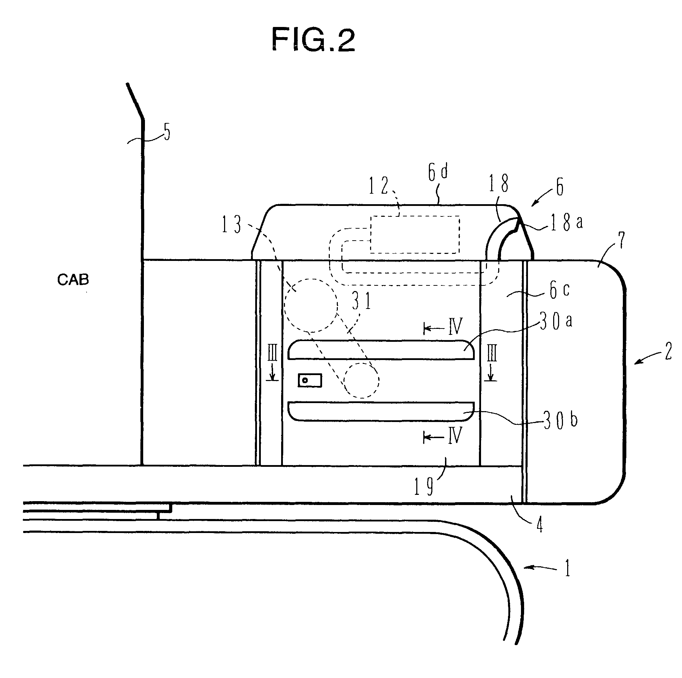

A first embodiment of the present invention will now be described with reference to Figures 1 to 5. In Figures 1 and 2, reference numeral 1 denotes an undercarriage of a hydraulically operated excavator. An upper structure 2 is rotatably mounted on the undercarriage 1 while a front attachment 3 is pivotally attached to a front portion of the upper structure 2. The upper structure 2 mainly comprises a frame 4 serving as a skeleton structure, a cab 5 installed on a front portion of the frame 4, a machine compartment 6 provided in the frame 4 rearwardly of the cab 5 and a counter weight 7 installed at the rearmost end of the frame 4.

The machine compartment 6 is constructed by a bottom panel 6a, left and right side panels 6b, 6c, an engine cover 6d, and a top panel 6e which are arranged so as to form a box-shaped structure. The machine compartment 6 interiorly is divided by a partition panel 6f into an engine compartment 6A and a pump compartment 6B. Installed in the engine compartment 6A are : an engine 8, a cooling fan 9 operatively connected to the engine 8, an oil cooler 10, a radiator 11 and a muffler 12 for discharging engine combustion gasses. A hydraulic pump (not shown), driven by the engine 8 and operable to pressurize a hydraulic system, is installed in the pump compartment 6B. An air cleaner 13 for filtering the engine combustion air is also provided in the same compartment.

Intake ports 14 are formed in the side panel 6b defining the engine compartment 6A of the machine compartment 6 and a side wall of the engine cover 6d while exhaust ports 15 are formed in the engine cover 6d. During operation, ambient air sucked in by the fan 9 through the intake ports 14 cools the oil cooler 10 and the radiator 11, whereafter it is discharged to the environment through the exhaust ports 15.

The air cleaner 13 is connected to the engine 8 by means of an intake duct 16 conducted through the partition panel 6f, and the muffler 12 is connected on the one hand to the engine 8 by an exhaust duct 17 and on the other hand to a further exhaust duct 18 conducted through the partition panel 6f and the top panel 6e. Air aspirated through intake ports 30a and 30b (which are described more in detail furtheron) is filtered by the air cleaner 13 and then supplied to the engine 8. Engine combustion gasses are muffled through the muffler 12 and then discharged through an exhaust port 18a of the exhaust duct 18.

In the side panel 6c delimiting the pump compartment 6B, a hingeable door 19 for maintenance and inspection is provided in a position adjacent to the air cleaner 13. The intake ports 30a, 30b for the air cleaner 13 are provided in the door 19 and an intake duct 31 extends from the air cleaner 13 to a position near the intake ports 30a, 30b whereby a joint duct 32 is provided for operatively connecting the intake ports 30a, 30b with the intake duct 31 when the door 19 is closed.

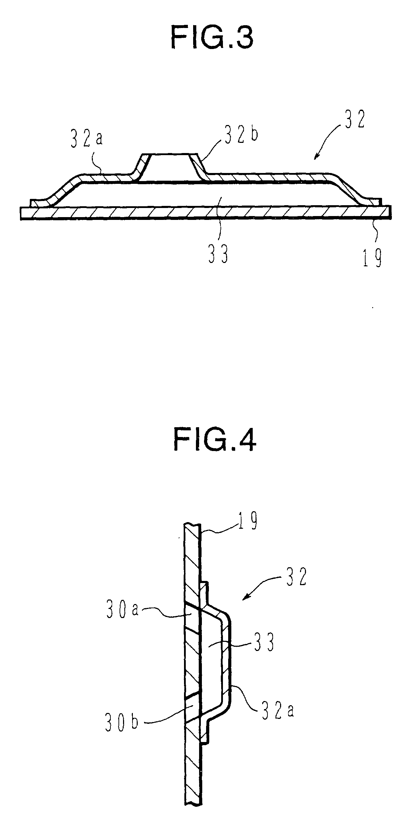

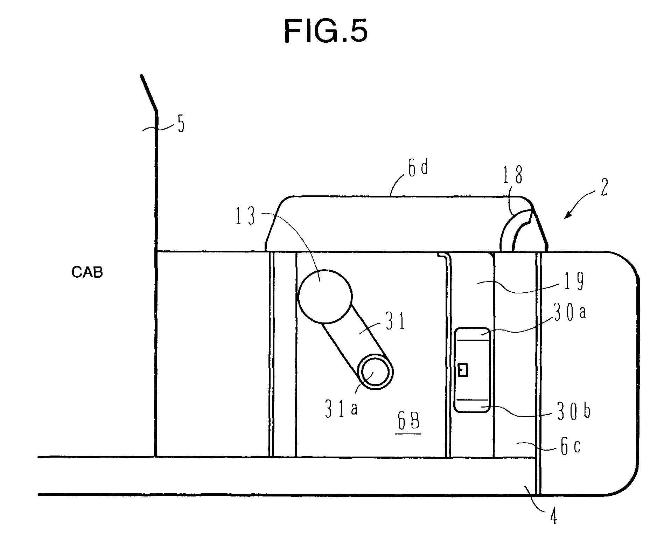

The joint duct 32 is attached to the inner side of the door 19 by welding or the like. The intake ports 30a, 30b are formed as two horizontally extending, elongate apertures ensuring a sufficient air inlet area. The joint duct 32 comprises, as shown in Figures 3 and 4, a box-shaped portion 32a positioned on the inner side of the door 19 so as to cover the intake ports 30a, 30b and defining a cavity 33 communicating with the intake ports 30a, 30b, and a tapered tubular portion 32b capable of fitting to an end opening 31a (see Figure 5) of the intake duct 31 when the door 19 is closed. The box-shaped portion 32a of the joint duct 32 has a bottom wall inclined downwardly to smoothly connect with the bottom surface of the lower intake port 30b so that rainwater eventually entering the cavity 33 is drained through the lower intake port 30b. The intake duct 31 is made of an elastic material such as rubber. When the door 19 is closed, a distal end of a tubular portion 32b of the joint duct 32 comes into close contact with the intake duct 31 preventing noise from spreading to the environment.

Figure 5 is a view showing the interior of the pump compartment 6B as seen when the door 19 is in the open position. As already described above, the engine exhaust gasses are muffled through the muffler 12 and then discharged through the exhaust port 18a of the exhaust duct 18 positioned above the top panel 6e. The ambient air aspirated by the fan 9 through the intake ports 14 for cooling the engine cools the oil cooler 10 and the radiator 11, whereafter it is discharged to the environment above the engine cover 6d through the exhaust ports 15. On the other hand, air is aspirated into the air cleaner 13 through the intake ports 30a, 30b formed in the door 19 provided in the side part of the machine compartment 6 and then filtered by the air cleaner 13 before entering the engine 8. This enables the air cleaner 13 to be provided, under all circumstances, with air having the normal ambient temperature, which is not influenced by the hot exhaust gasses or the cooling air heated after the heat exchange. As a result, the combustion efficiency of the engine 8 is improved.

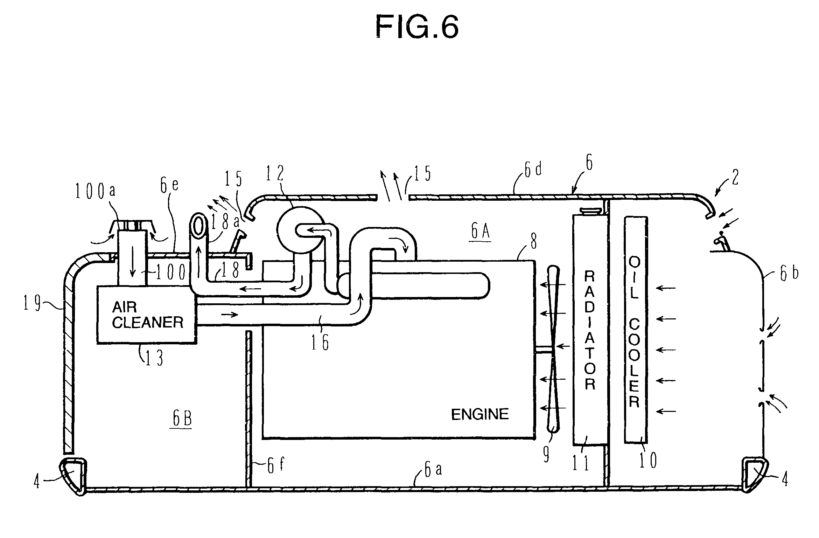

For ease of comparison, a conventional engine intake structure is shown in Figure 6 in which reference numeral 100 denotes an intake duct for the air cleaner 13, the intake duct 100 extending upwardly through the top panel 6e and ending in an intake port 100a positioned above the top panel 6e. In such a conventional engine intake structure, because the intake port 100a for the air cleaner 13 is provided at the top of the machine compartment 6, being at the same level as the exhaust port 18a for the muffler 12 and the exhaust ports 15 of the cooling air, the air cleaner is apt to suck in the exhaust gasses of the engine 8 or the heated air after having cooled the oil cooler and the radiator, and hence the temperature of the aspirated air is increased. This results a in lower combustion efficiency of the engine 8.

In the embodiment of Figures 1 to 5, the joint duct 32 joints with the intake duct 31 for operatively connecting the intake ports 30a, 30b therewith when the door 19 is closed, and the joint duct 32 is disconnected from the intake duct 31 as shown in Figure 5 when the door 19 is opened. Therefore, the door 19 can be opened and closed in a manner similar to a conventional door when carrying out the maintenance/inspection work without any disturbance.

Also, when the wind is blowing rain against the door 19, rainwater entered into the cavity 33 is drained through the lower intake port 30b and, therefore, no water will enter the air cleaner 13. Furthermore, since the intake ports 30a, 30b are in the form of elongate apertures and the joint duct 32 includes the box-shaped portion 32a defining the cavity 33 therein, the intake ports for the air cleaner 13 have a large opening area and the intake pressure can be kept sufficiently low.

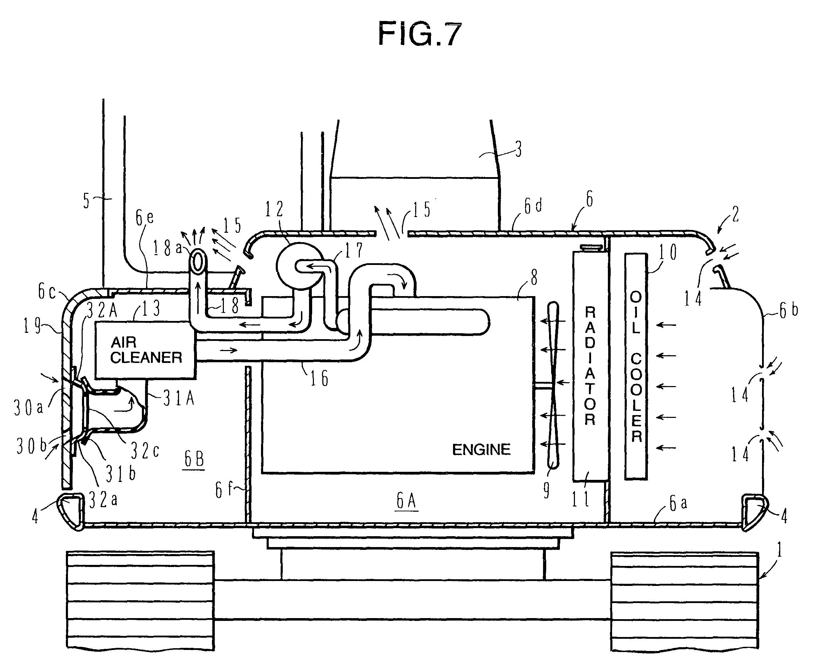

Another embodiment of the present invention is described with reference to Figure 7. In this embodiment, a joint duct is constructed to be directly closely contacted and jointed with an intake duct without providing a tubular portion on the joint duct. The joint duct 32A is formed only by a box-shaped portion 32a having an opening 32c. An intake duct 31A is made of rubber and a distal end 31b of the intake duct 31A defines an opening formed into a trumpetlike shape diverging outwardly. When the door 19 is closed, the trumpet-shaped distal end 31b of the intake duct 31A comes into close contact with a peripheral edge of the opening 32c.

Also in this embodiment, the joint duct 32A joints with the intake duct 31A for operatively connecting the intake ports 30a, 30b therewith when the door 19 is closed, and the joint duct 32A is disconnected from the intake duct 31A when the door 19 is opened. Therefore, similar advantages to those described in relation to the first embodiment are obtained.

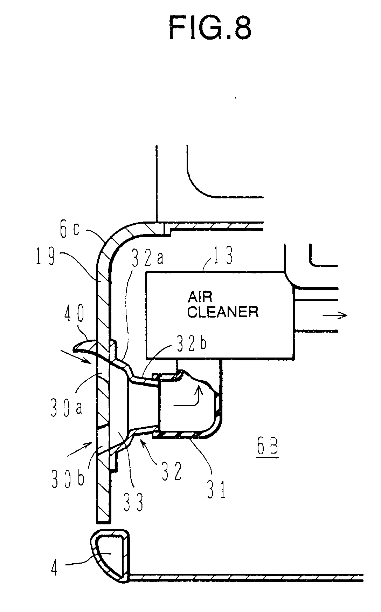

Although the above embodiments are arranged so as to drain rainwater through the lower intake port 30b, a hood 40 nevertheless may be provided above the upper intake port 30a, as shown in Figure 8, to more effectively prevent water from entering the intake ports 30a, 30b.

In the above embodiments, the intake ducts 31, 31A are made of an elastic material such as rubber to achieve close contact between the joint ducts 32, 32A and the intake ducts 31, 31A. However, a similar close joint structure can also be achieved by forming at least a contact portion of at least one of the joint ducts 32, 32A or the intake ducts 31, 31A of an elastic material. Where the intake ports 30a, 30b are replaced by one opening, the distal end of the intake duct 31, 31A may directly come into close contact with the intake opening without providing the joint duct 32, 32A.

## Claims

1. An engine air intake structure for an industrial vehicle wherein an engine (8) and an air cleaner (13) for filtering air aspirated into said engine (8) are installed in a machine compartment (6), and a door (19) for maintenance and inspection is provided in said machine compartment (6); said engine air intake structure comprising :
- an air intake port (30a, 30b) for said air cleaner (13) provided in said door (19),
- an intake duct (31/ 31A) extending from said air cleaner (13) to a position near said intake port (30a, 30b), and
- joint means (32/ 32A) for operatively connecting said intake port (30a, 30b) with said intake duct (31/ 31A) when said door (19) is closed; and
**characterized in that** said intake port (30a, 30b) is formed by at least one elongate horizontal aperture in a side panel (6c) of said machine compartment (6) at a position adjacent to said air cleaner.

2. An intake structure according to claim 1 wherein said joint means is provided on the inner side of said door (19) in operative communication with said intake port (30a, 30b), and includes a joint duct (32/ 32A) jointed to said intake duct (31/ 31A) when said door (19) is closed, and **characterized in that** said joint duct (32/ 32A) comprises a box-shaped portion positioned on the inner side of said door (19) so as to cover said intake port (30a, 30b) and defining a cavity (33) in operative communication therewith, and an opening (32b, 32c) jointed to said intake duct (31/ 31A) when said door (19) is closed.

3. An intake structure according to claim 2 **characterized in that** the box-shaped portion of said joint duct (32/ 32A) has a bottom wall inclined downwardly to smoothly connect with a bottom surface of said intake port (30a, 30b).

4. An intake structure according to any of the preceding claims **characterized in that** at least a contact portion of at least one of said joint means (32/ 32A) or said intake duct (31/ 31A) is formed of an elastic material such as rubber.

## Patentansprüche

1. Motor-Ansaugsystem für ein gewerbliches Fahrzeug, bei dem ein Motor (8) und ein Luftfilter (13) zum Filtern von in den Motor (8) angesaugter Luft in einen Maschinenraum (6) eingebaut sind, wobei eine Tür (19) für die Wartung und Inspektion in dem Maschinenraum (6) angeordnet ist, wobei das Motor-Luftansaugsystem folgendes umfaßt:
- eine Lufteinlaßöffnung (30a, 30b) für den Luftfilter (13), die in der Tür (19) vorgesehen ist,
- ein Ansaugkanal (31/31A), der sich von dem Luftfilter (13) zu einer Position in der Nähe der Einlaßöffnung (30a, 30b) erstreckt, und
- Verbindungseinrichtungen (32/32A) zum betriebsmäßigen Verbinden der Einlaßöffnung (30a, 30b) mit dem Ansaugkanal (31/31A), wenn die Tür geschlossen ist, und
**dadurch gekennzeichnet, daß** die Einlaßöffnung (30a, 30b) durch zumindest eine langgestreckte horizontale Öffnung in einer Seitenplatte (6c) des Maschinenraumes (6) an einer Position benachbart zu dem Luftfilter gebildet ist.

2. Ansaugsystem nach Anspruch 1, bei der die Verbindungseinrichtung auf der Innenseite der Tür (19) in betriebsmäßiger Verbindung mit der Einlaßöffnung (30a, 30b) vorgesehen ist und einen Verbindungskanal (32/32A) einschließt, der mit dem Ansaugkanal (31/31A) verbunden ist, wenn die Tür (19) geschlossen ist, **dadurch gekennzeichnet, daß** der Verbindungskanal (32/32A) einen kastenförmigen Abschnitt, der auf der Innenseite der Tür (19) derart angeordnet ist, daß er die Einlaßöffnung (30a, 30b) abdeckt und einen Hohlraum (33) in betriebsmäßiger Verbindung mit dieser bildet, und eine Öffnung (32b, 32c) umfaßt, die mit dem Ansaugkanal (31/31A) verbunden ist, wenn die Tür (19) geschlossen ist.

3. Ansaugsystem nach Anspruch 2, **dadurch gekennzeichnet, daß** der kastenförmige Abschnitt des Verbindungskanals (32/32A) eine Bodenwand aufweist, die nach unten geneigt ist, um eine glatte Verbindung mit einer unteren Oberfläche der Einlaßöffnung (30a, 30b) zu bilden.

4. Ansaugsystem nach einem der vorhergehenden Ansprüche, **dadurch gekennzeichnet, daß** zumindest ein Kontaktbereich der Verbindungseinrichtungen (32/32A) und/oder des Ansaugkanals (31/31A) aus einem elastischen Material, wie zum Beispiel Gummi, gebildet ist.

## Revendications

1. Structure d'admission d'air de moteur (8) pour un véhicule industriel dans lequel sont installés un moteur (8) et un filtre à air (13) à l'intérieur d'un compartiment de machine (6) pour filtrer l'air aspiré dans ledit moteur (8), et une trappe (19) pour l'entretien et l'inspection est prévue dans un panneau latéral (6c) dudit compartiment de machine (6) à proximité dudit filtre à air; ladite structure d'admission d'air de moteur comprenant:
- un orifice d'admission d'air (30a, 30b) pour ledit filtre à air (13) prévu dans ladite trappe (19),
- un conduit d'admission (31/ 31A) se prolongeant dudit filtre à air (13) vers une position proche dudit orifice d'admission (30a, 30b), et
- un moyen de liaison (32/ 32A) pour raccorder fonctionnellement ledit orifice d'admission (30a, 30b) audit conduit (31/ 31A) d'admission lorsque ladite trappe (19) est fermée; et
**caractérisée en ce que** l'orifice d'admission (30a, 30b) est constitué par au moins une ouverture horizontale allongée dans un panneau latéral (6c) dudit compartiment de machine (6) en une position adjacente audit filtre à air.

2. Structure d'admission selon la revendication 1 dans laquelle ledit moyen de liaison est prévu à l'intérieur de ladite trappe (19) en communication fonctionnelle avec ledit orifice d'admission (30a, 30b), et comprend un conduit de liaison (32/ 32A) relié audit conduit d'admission (31/ 31A) lorsque ladite trappe (19) est fermée, et **caractérisé en ce que** ledit conduit de liaison (32/ 32A) comprend une portion en forme de caisse positionnée à l'intérieur de ladite trappe (19) pour couvrir ledit orifice d'admission (30a, 30b) et définir une cavité (33) en communication avec celui-ci, et une ouverture (32b, 32c) raccordée audit conduit d'admission (31/ 31A) lorsque ladite trappe (19) est fermée.

3. Structure d'admission selon la revendication 2, **caractérisée en ce que** la portion en forme de caisse dudit conduit de liaison (32/ 32A) possède une paroi inférieure inclinée vers le bas pour se raccorder souplement avec une surface inférieure dudit orifice d'admission (30a, 30b).

4. Structure d'admission selon l'une quelconque des revendications précédentes, **caractérisée en ce qu'**au moins une portion de contact d'au moins un desdits moyens de liaison (32/ 32A) ou dudit conduit d'admission (31/ 31A) est constituée d'un matériau élastique tel que du caoutchouc.
